# EUROPEAN PATENT SPECIFICATION

(11) **EP 1 474 971 B1**
(45) Date of publication and mention of the grant of the patent: **11.04.2007**
(21) Application number: 04077138.8
(22) Date of filing: 26.02.2002
(51) Int. Cl.: A01K 5/02

(54) **A feed metering device for supplying fodder and/or drink in metered portions to an animal**
Futterdosiervorrichtung um Futter oder Getränke in gemessenen Portionen einem Tier zuzuführen
Dispositif de dosage d'alimentation pour la livraison d'alimentation ou de boisson à un animal par portions mesurées

(30) Priority: 02.03.2001 NL 1017477
(43) Date of publication of application: 10.11.2004
(62) Divisional of application: 02075755.5
(73) Proprietor: Lely Enterprises AG, 6300 ZUG (CH)
(72) Inventor: Sie, Howard, 3037 VC Rotterdam (NL); Van den Berg, Karel, 2971 BR Bleskensgraaf (NL); Voogd, Lucien Eliza, 4143 HG Leerdam (NL)
(74) Representative: Corten, Maurice Jean F.M.

(56) References cited:
- EP-A- 0 610 171
- WO-A-00/38505
- WO-A-95/23503
- US-A- 3 333 573
- US-A- 3 359 947
- US-A- 4 297 974

## Description

The present invention relates to a feed metering device for supplying fodder and/or drink to an animal, as defined in the preamble of claim 1.

Such a feed metering device is known from document US-A-3,333,573. In this document a feed metering device for supplying feed to poultry under restricted feeding regime is described. The feed metering device is provided with a feeding trough and closing means for closing the entrance opening of the feeding trough. The device is further provided with a feed metering device; which is provided with a clock for determining the duration from a supply of a quantity of fodder and for issuing, in dependence of the result of the determination of the duration, a signal for operating the closing means. Also from document US-A-4,297,974 a feeding device as described above is known.

From document US-A-3,359,947 there is known a clock operated trough, wherein the closing means are constituted by the movable/turnable trough itself.

From document WO-A-00/38505 there is known a feed metering device for supplying feed and/or drink to animals that includes a metering device connected to several reservoirs containing feed and/or drink and also feeding troughs with a weighing device in connection with a feeding trough for determining the amount of feed present in the trough. The weighing device can be used to establish the eating speed of an animal, which data can be stored in a memory of a computer.

It is an object of the invention to provide an improved feed metering device.

According to the invention, this is achieved by the features of claim 1.

This makes it possible to operate the closing means, after an animal has consumed at least a part of the quantity of fodder and/or drink, so that further access to the feeding trough is impossible for that animal. An animal that has just made use of the feeding trough is thus urged to clear the entrance to the feeding trough.

The jamming device prevents an animal from being injured during closing of the entrance opening to the feeding trough.

There is preferably provided an obstacle detector for detecting an obstacle in the entrance opening. Such an obstacle detector is preferably adapted to distinguish animals and other objects from each other.

It has appeared that animals, after having taken the quantity of fodder and/or drink, knock or kick with force against the feed metering device for trying to obtain additional fodder and/or drink. According to the invention this undesirable behaviour is prevented by providing an anti-violence detector. When said anti-violence detector, which may comprise e.g. a vibration detector, detects that there is knocked or the like against the feed metering device, said detector issues a signal for operating the closing means for closing the feeding trough.

Preferably a detector is suitable for issuing, after detection of a particular situation, a signal for controlling the functioning of the closing means.

Preferably the feed metering device is further provided with an animal identification device for identifying a particular animal that visits the feeding trough. Such an animal identification device may be used extremely advantageously for supplying a quantity of fodder and/or drink by the feed supplying device to the feeding trough with the aid of data from the animal identification device. With the aid of data from the animal identification device the operation of the closing means is controlled in an advantageous manner, so that it is possible to forbid a particular animal access to the feeding trough. Just because the animal identification device is adapted to identify a particular animal, said device is especially suitable for holding back an animal wishing to make use of the feeding trough at an undesired point of time. Moreover, the animal identification device is adapted to co-operate with the obstacle detector for obtaining an extremely efficient functioning of the closing means.

The closing means may be formed by a separate component, but is preferably constituted by the feeding trough itself which is designed as a movable one. As a result thereof the number of components is limited and the feed metering device can be manufactured cheaply.

The detection device preferably comprises a weighing device for weighing the quantity of fodder and/or drink in the feeding trough. Said weighing device is capable of measuring whether or not there is still fodder and/or drink present in the feeding trough after the supply of a quantity of fodder and/or drink into the feeding trough. Thus the weighing device, e.g. after having detected that there is no more fodder and/or drink present in the feeding trough, can issue a signal for operating the closing means for closing the feeding trough.

In particular when data from the weighing device and the clock are combined, an extremely efficient use of the feed metering device is possible.

A feed metering device according to the invention is in particular characterized in that the feed metering device is provided with a device for issuing a warning signal indicating that the closing means is going to close. In this manner an animal knows when the closing means is going to close, and thus it is possible to teach the animal to leave the feeding trough when the warning signal (e.g. a sound or light signal) is issued.

In an embodiment of a feed metering device according to the invention the feed metering device is provided with a means for determining the decrease per unit of time of the quantity of fodder and/or drink in the feeding trough. Such a means may be used for issuing a signal for operating the closing means, but may also be used (in combination with an animal identification) for determining whether the eating rate of a particular animal corresponds with its usual eating rate. Said eating rate may be an indication of the health of an animal.

It is particularly advantageous when the feed metering device is provided with a comparator for comparing the determined decrease per unit of time with a decrease threshold. When the determined decrease per unit of time is equal to or smaller than the decrease threshold, the comparator can issue a signal causing the closing means to close the entrance opening. For reasons of accuracy the feed metering device is preferably provided with a file for containing per animal a decrease threshold.

The invention will be elucidated hereinafter by way of example with reference to the drawing, in which:
Figure 1 shows an embodiment of a feed metering device according to the invention, and
Figure 2 shows an alternative embodiment of a feed metering device according to the invention.

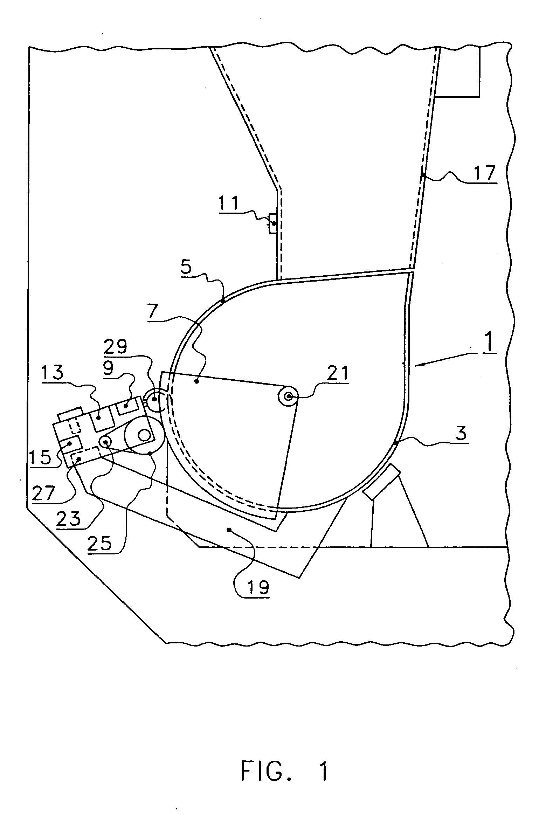

Figure 1 shows schematically an embodiment of a feed metering device 1 according to the invention. The feed metering device 1 supplies fodder and/or drink (hereinafter designated by feed, by which is meant fodder and/or drink) in metered portions to an animal, and is provided with a feeding trough 3 for containing feed. An entrance opening 5 makes the feeding trough 3 accessible to an animal, for example but not exclusively a cow. An animal identification device 15 known per se is preferably disposed in the feed metering device 1 and identifies a particular animal approaching the feeding trough 3 and wishing to make use of it. A feed supplying device 17 supplies a quantity of feed into the feeding trough 3, possibly with the aid of data from the animal identification device 15, the feed from a non-shown feed stock arriving in the feeding trough 3 via e.g. a (non-shown) flap and a chute.

Thus it is possible for the feed metering device 1 to identify a particular animal, e.g. a cow, for example by means of a transponder fitted to or on the cow. The feed supplying device 17 is controlled in a manner known per se by software ensuring that the right amount of feed is supplied to the relevant cow.

The feed metering device 1 is provided with a closing means 7 that is movable across an entrance opening 5 of the feeding trough 3. When the closing means 7 is moved across the entrance opening 5, the feeding trough 3 is made inaccessible to a particular animal, after which, as it has appeared in practice, the animal clears of its own will the entrance to the feeding trough 3 for a next animal. In the embodiment shown the closing means 7 is constituted by a vessel-like element which is capable of rotating about an axis 21. Said axis 21 may be constituted by an axis which is driven by a motor, which motor, as will be described hereinafter, is controlled with the aid of data in relation to the quantity of feed present in the feeding trough.

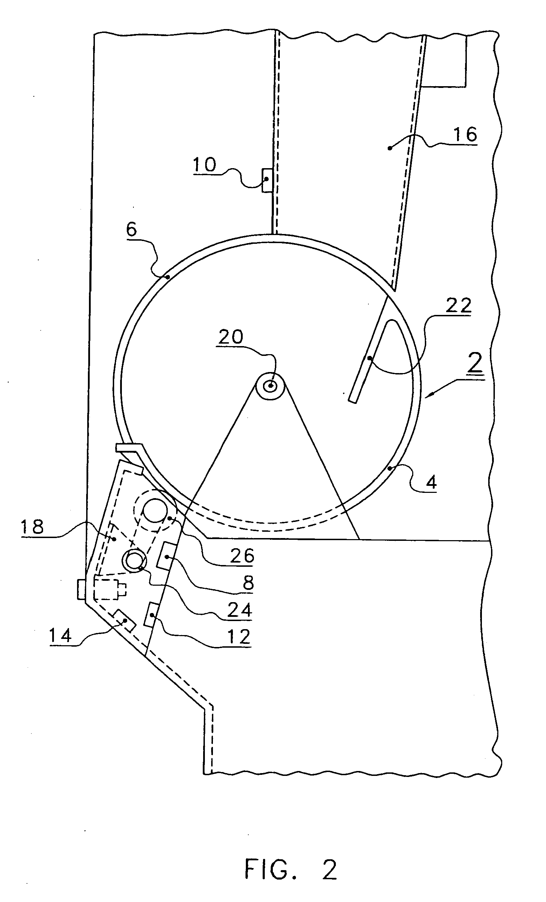

Figure 2 shows schematically an alternative embodiment of a feed metering device 2 according to the invention. In this embodiment the closing means is constituted by the feeding trough 4 itself which is designed as a movable one. In the shown situation the feeding trough 4 is rotatably disposed about an axis 20, which axis 20 may be constituted by an axis which is driven by a motor, said motor being controlled with the aid of data in relation to the quantity of feed present in the feeding trough, as will be elucidated hereinafter. In order to prevent feed from falling from the feeding trough 4 in the position in which the feeding trough 4 closes the entrance opening 6, the feeding trough 4 is provided with a wall portion 22 for catching remaining feed. Said wall portion 22 can also act as a feed guide means for feed supplied by the feed supplying device 16 into the feeding trough 4.

In the embodiments described the closing means rotates about an axis, the closing means being driven by a motor controlled with the aid of data in relation to the quantity of feed present in the feeding trough. For the purpose of providing besides a simple but reliable construction also a compact construction, a roll 25 respectively 26 is preferably driven by a motor 23 respectively 24, which roll 25, 26 contacts the closing means 7 respectively 4. According to the invention the feed metering device 1; 2 is provided with a detection device 19; 18 for detecting after a supply of a quantity of feed that at least a part of the quantity of feed has been removed from the feeding trough 3; 4, and for issuing thereupon a signal for operating the closing means 7; 4. Thus it is possible to prevent that, after an animal has taken at least a part of the quantity of feed, this animal remains staying at the feeding trough 3; 4, by operating the closing means 7; 4 after receipt of a signal from the detection device 19; 18. An animal which has just made use of the feeding trough is then urged to clear the entrance to the feeding trough. Such a detection device may for example be constituted by a camera which, by means of image recognition software, can give an estimation of the quantity of feed present in the feeding trough.

However, the detection device is preferably constituted by a weighing device for weighing the feed present in the feeding trough. Such weighing devices are known per se. With the aid of these means it is possible to determine how much feed has been consumed by a particular animal, and also whether there is remaining feed present in the feeding trough. The closing means 7; 4 is then preferably controlled with the aid of data both from the animal identification device and from the weighing device, so that the eating behaviour of a particular animal can be taken into account. The weighing device is capable of measuring whether or not there is still feed present in the feeding trough after the supply of a quantity of feed into the feeding trough, and how much remaining feed is left. Thus the weighing device, e.g. after having detected that there is no more feed present in the feeding trough, can issue a signal for operating the closing means for closing the feeding trough.

As shown in Figure 1, the weighing device is constituted by a device 19 for determining the degree of pivotability of the feeding trough 3, and for deducing there from the weight of the feed present in the feeding trough 3. In this situation, in the example shown, the feeding trough 3 bears on the load sensor 27 via a supporting arm 19, the feeding trough 3 pivoting about a hinge pin 29.

In the embodiment of Figure 2 the weighing device for weighing the feed present in the feeding trough comprises the movable feeding trough 4. The feeding trough 4 is moved in a reciprocating manner by the motor 24 by which the roll 26 is driven. This movement generates a torque whose magnitude is determined by a device 18 for measuring the magnitude of the torque from the torque determined the device 18 deduces the weight of the feed present in the feeding trough. The exact correlation between torque and quantity of feed can previously be determined by means of simple calibration tests.

The detection device 19; 18 comprises a clock, so that it is possible to measure how long the quantity of (remaining) feed in the feeding trough 3; 4 remains untouched. By setting for example an upper limit, after said upper limit has elapsed, i.e. after a certain threshold time has elapsed, the clock can issue a signal for having the closing means 7; 4 closed. In particular when data from the weighing device and the clock are combined, an extremely efficient use of the feed metering device is possible. This makes it possible for example to use per animal a combination of data in relation to a lower threshold for remaining feed and an upper threshold for the time for operating the closing means 7; 4. Thus, when during a longer time than the threshold time less than the lower threshold of feed is present in the feeding trough 3; 4, the closing means is operated. As a non-limiting example can be taken: approximately 2% to 10% of the quantity of feed supplied by the feed supplying device to the feeding trough as a threshold for the quantity of remaining feed, and approximately 10 to 60 seconds as a threshold time.

The embodiments of a feed metering device shown in Figures 1 and 2 are provided with a device 9; 8 for detecting jamming for the closing means 7; 4. This prevents an animal from being injured during closing of the entrance opening to the feeding trough. A device for detecting jamming is known per se, for example with automatically closing car windows. When the device for detecting jamming detects a jamming, said device ensures by controlling the closing means that the latter clears the entrance opening. Preferably the closing means is re-closed automatically after a short time, e.g. less than 2 seconds. When an animal does not clear the feeding trough after the first closing of the closing means, the closing means will repeat the closing action several times until it has completely closed the entrance opening. When the closing means continues to open and close, there may have occurred a defect. Consequently it is advisable to perform closing of the closing means a maximum number of times, an alarm signal being issued after said maximum number has been reached. Said alarm signal may be audible, visible or otherwise.

An obstacle detector 11; 10 is provided for detecting an obstacle in the entrance opening. Such an obstacle detector 11; 10 is preferably suitable for distinguishing animals and other objects from each other. For that purpose a combination with the animal identification device is advantageous, although image recognition equipment is possible as well. An obstacle could for example be constituted by the hand of a person cleaning the feeding trough, it then being obvious that the closing means must not be closed when the hand is located in the entrance opening.

The embodiments of the invention according to Figures 1 and 2 also comprise an anti-violence detector 13; 12 for detecting undesired kicking, knocking or the like against the feed metering device 1; 2. When the anti-violence detector 13; 12, which may comprise e.g. a vibration detector, detects that there is knocked or the like against the feed metering device 1; 2, then said detector issues a signal for operating the closing means 7; 4 for closing the feeding trough 3; 4.

There is preferably provided a device for issuing a warning signal indicating closing of the closing means, so that the animals are warned of closing.

## Claims

1. A feed metering device (1) for supplying fodder and/or drink to an animal, said feed metering device being provided with a feeding trough (3, 4) for containing fodder and/or drink, an entrance opening (5, 6) to the feeding trough, a closing means for closing the entrance opening, and a feed supplying device (17, 16) for intermittently supplying a quantity of fodder and/or drink into the feeding trough, said feed metering device being provided with a clock for determining the duration from a supply of a quantity of fodder and/or drink and for issuing, in dependence of the result of the determination of the duration, a signal for operating the closing means, **characterized in that** the feed metering device (1) is provided with a detection device (19, 18) for determining the quantity of fodder and/or drink in the feeding trough (3, 4) at a point of time after a supply of a quantity of fodder and/or drink and for issuing, in dependence of the result of the quantity determination, a signal for operating the closing means (7, 4), and **in that** the feed metering device is provided with a device (9, 8) for detecting jamming for the closing means.

2. A feed metering device as claimed in claim 1, **characterized in that** there is provided an obstacle detector (11, 10) for detecting an obstacle in the entrance opening.

3. A feed metering device as claimed in claim 1 or 2, **characterized in that** the feed metering device is provided with an anti-violence detector (13).

4. A feed metering device as claimed in any one of the preceding claims, **characterized in that** a detector is suitable for issuing, after detection of a particular situation, a signal for controlling the functioning of the closing means (7, 4).

5. A feed metering device as claimed in any one of the preceding claims, **characterized in that** the feed metering device is further provided with an animal identification device (15) for identifying a particular animal that visits the feeding trough.

6. A feed metering device as claimed in any one of the preceding claims, **characterized in that** the closing means is constituted by the feeding trough (4) itself which is designed as a movable one.

7. A feed metering device as claimed in any one of the preceding claims, **characterized in that** the detection device comprises a weighing device for weighing the quantity of fodder and/or drink in the feeding trough (3, 4).

8. A feed metering device as claimed in any one of the preceding claims, **characterized in that** the feed metering device (1) is provided with a device for issuing a warning signal indicating that the closing means (7, 4) is going to close.

9. A feed metering device as claimed in any one of the preceding claims, **characterized in that** the feed metering device (1) is provided with a means for determining the decrease per unit of time of the quantity of fodder and/or drink in the feeding trough.

10. A feed metering device as claimed in claim 9, **characterized in that** the feed metering device (1) is provided with a comparator for comparing the determined decrease per unit of time with a decrease threshold.

## Patentansprüche

1. Futterdosiervorrichtung (1) zum Zuführen von Futter und/oder Trinkflüssigkeit zu einem Tier, wobei die Futterdosiervorrichtung mit einem Futtertrog (3, 4) zur Aufnahme von Futter und/oder Trinkflüssigkeit, einer Eintrittsöffnung (5, 6) zu dem Futtertrog, einer Schließvorrichtung zum Schließen der Eintrittsöffnung und einer Futterzuführvorrichtung (17, 16) versehen ist, die periodisch eine Menge an Futter und/oder Trinkflüssigkeit in den Futtertrog einleitet, wobei die Futterdosiervorrichtung mit einer Uhr versehen ist, um die Zeit seit einer Einleitung einer Menge an Futter und/oder Trinkflüssigkeit zu ermitteln und in Abhängigkeit von dem Ergebnis der Zeitermittlung ein Signal zum Betätigen der Schließvorrichtung zu geben,
**dadurch gekennzeichnet, daß** die Futterdosiervorrichtung (1) mit einer Ermittlungsvorrichtung (19, 18) versehen ist, um die Menge an Futter und/oder Trinkflüssigkeit in dem Futtertrog (3, 4) zu einem Zeitpunkt nach einer Einleitung einer Menge an Futter und/oder Trinkflüssigkeit zu ermitteln und in Abhängigkeit von dem Ergebnis der Mengenermittlung ein Signal zur Betätigung der Schließvorrichtung (7, 4) zu geben, und daß die Futterdosiervorrichtung mit einer Vorrichtung (9, 8) zum Ermitteln eines Klemmens der Schließvorrichtung versehen ist.

2. Futterdosiervorrichtung nach Anspruch 1,
**dadurch gekennzeichnet, daß** ein Hindernisdetektor (11, 10) vorgesehen ist, um ein Hindernis in der Eintrittsöffnung zu detektieren.

3. Futterdosiervorrichtung nach Anspruch 1 oder 2,
**dadurch gekennzeichnet, daß** die Futterdosiervorrichtung mit einem Antigewaltdetektor (13) versehen ist.

4. Futterdosiervorrichtung nach einem der vorhergehenden Ansprüche,
**dadurch gekennzeichnet, daß** ein Detektor dazu ausgebildet ist, nach dem Detektieren einer bestimmten Situation ein Signal zum Steuern der Funktion der Schließvorrichtung (7, 4) zu geben.

5. Futterdosiervorrichtung nach einem der vorhergehenden Ansprüche,
**dadurch gekennzeichnet, daß** die Futterdosiervorrichtung ferner mit einer Tieridentifikationsvorrichtung (15) zum Identifizieren eines bestimmten Tieres versehen ist, das den Futtertrog besucht.

6. Futterdosiervorrichtung nach einem der vorhergehenden Ansprüche,
**dadurch gekennzeichnet, daß** die Schließvorrichtung durch den Futtertrog (4) selbst gebildet ist, der beweglich ausgebildet ist.

7. Futterdosiervorrichtung nach einem der vorhergehenden Ansprüche,
**dadurch gekennzeichnet, daß** die Ermittlungsvorrichtung eine Wiegevorrichtung zum Wiegen der in dem Futtertrog (3, 4) befindlichen Menge an Futter und/oder Trinkflüssigkeit umfaßt.

8. Futterdosiervorrichtung nach einem der vorhergehenden Ansprüche,
**dadurch gekennzeichnet, daß** die Futterdosiervorrichtung (1) mit einer Vorrichtung zur Abgabe eines Warnsignals versehen ist, das anzeigt, daß sich die Schließvorrichtung (7, 4) schließen wird.

9. Futterdosiervorrichtung nach einem der vorhergehenden Ansprüche,
**dadurch gekennzeichnet, daß** die Futterdosiervorrichtung (1) mit einer Vorrichtung versehen ist, um die Abnahme pro Zeiteinheit der Menge an Futter und/oder Trinkflüssigkeit in dem Futtertrog zu ermitteln.

10. Futterdosiervorrichtung nach Anspruch 9,
**dadurch gekennzeichnet, daß** die Futterdosiervorrichtung (1) mit einem Komparator versehen ist, um die ermittelte Abnahme pro Zeiteinheit mit einem Abnahme-Grenzwert zu vergleichen.

## Revendications

1. Dispositif de dosage d'aliment pour animaux(1) pour la distribution de fourrage et/ou de boisson à un animal, ledit dispositif de dosage d'aliment pour animaux étant doté d'une mangeoire (3, 4) pour contenir du fourrage et/ou une boisson, d'une ouverture d'entrée (5, 6) sur la mangeoire, d'un moyen de fermeture pour fermer l'ouverture d'entrée, et d'un dispositif de distribution d'aliment pour animaux (17, 16) pour distribuer par intermittence une quantité de fourrage et/ou une boisson dans la mangeoire, ledit dispositif de dosage d'aliment pour animaux étant doté d'une horloge pour déterminer la durée à partir d'une distribution d'une quantité de fourrage et/ou de boisson et pour émettre, en fonction du résultat de la détermination de la durée, un signal pour actionner le moyen de fermeture, **caractérisé en ce que** ledit dispositif de dosage d'aliment pour animaux (1) est doté d'un dispositif de détection (19, 18) pour déterminer la quantité de fourrage et/ou de boisson dans la mangeoire (3, 4) à un moment donné postérieur à une distribution d'une quantité de fourrage et/ou de boisson et pour émettre, en fonction du résultat de la détermination de la quantité, un signal pour actionner le moyen de fermeture (7, 4), et **en ce que** le dispositif de dosage d'aliment pour animaux est doté d'un dispositif (9, 8) pour détecter le blocage du moyen de fermeture.

2. Dispositif de dosage d'aliment pour animaux selon la revendication 1, **caractérisé en ce qu'**un détecteur d'obstacle (11, 10) est fourni pour détecter un obstacle dans l'ouverture d'entrée.

3. Dispositif de dosage d'aliment pour animaux selon la revendication 1 ou 2, **caractérisé en ce que** ledit dispositif de dosage d'aliment pour animaux est doté d'un détecteur anti-violence (13).

4. Dispositif de dosage d'aliment pour animaux selon l'une quelconque des revendications précédentes, **caractérisé en ce qu'**un détecteur est adapté pour émettre, après détection d'une situation particulière, un signal pour contrôler le fonctionnement du moyen de fermeture (7, 4).

5. Dispositif de dosage d'aliment pour animaux selon l'une quelconque des revendications précédentes, **caractérisé en ce que** ledit dispositif de dosage d'aliment pour animaux est en outre pourvu d'un dispositif d'identification d'animal (15) pour identifier un animal spécifique se rendant à la mangeoire.

6. Dispositif de dosage d'aliment pour animaux selon l'une quelconque des revendications précédentes, **caractérisé en ce que** le moyen de fermeture est constitué par la mangeoire (4) proprement-dite qui est conçue en tant que mangeoire amovible.

7. Dispositif de dosage d'aliment pour animaux selon l'une quelconque des revendications précédentes, **caractérisé en ce que** ledit dispositif de dosage d'aliment pour animaux comprend un dispositif de pesage pour peser la quantité de fourrage et/ou de boisson dans la mangeoire (3, 4).

8. Dispositif de dosage d'aliment pour animaux selon l'une quelconque des revendications précédentes, **caractérisé en ce que** ledit dispositif de dosage d'aliment pour animaux (1) est doté d'un dispositif pour émettre un signal d'alerte indiquant que le moyen de fermeture (7, 4) va se fermer.

9. Dispositif de dosage d'aliment pour animaux selon l'une quelconque des revendications précédentes, **caractérisé en ce que** ledit dispositif de dosage d'aliment pour animaux (1) est doté d'un moyen pour déterminer la diminution par unité de temps de la quantité de fourrage et/ou de boisson dans la mangeoire.

10. Dispositif de dosage d'aliment pour animaux selon la revendication 9, **caractérisé en ce que** ledit dispositif de dosage d'aliment pour animaux (1) est doté d'un comparateur pour comparer la diminution déterminée par unité de temps avec un seuil de diminution.
